# EUROPEAN PATENT APPLICATION

(11) **EP 0 788 753 A1**
(43) Date of publication of application: **13.08.1997**
(21) Application number: 96906077.1
(22) Date of filing: 15.03.1996
(51) Int. Cl.: A47J 31/00, A47J 31/053, A47J 31/42, A47J 31/50

(54) **COFFEE EXTRACTING APPARATUS**

(30) Priority: 28.08.1995 JP 243797/95; 19.01.1996 JP 25998/96
(71) Applicant: Enomoto, Koichi, Kobe-shi, Hyogo 658 (JP)
(72) Inventor: ENOMOTO, Kazuo, Kobe-shi, Hyogo 658 (JP)
(74) Representative: Sparing - Röhl - Henseler Patentanwälte
(86) International application number: PCT/JP96/00715
(87) International publication number: WO 97/07722

(57) **Abstract**

A coffee extracting apparatus comprises an extractor (20) for a coffee liquid, a receiver-decanter (30) capable of holding water for extraction, receiving the coffee liquid into a cup or the like, a circulation passage (50) and a circulating pump (60) for conveying a liquid in the receiver-decanter (30) and pouring the same into the extractor (20), a circulating water heater (70), and a control unit (90). The control unit (90) drives the circulating pump (60) for a predetermined period of time (T₁) for circulating of the liquid when a water supply and extraction switch (11) is on, and turns on the circulation water heater (70) for a limited period of time (T₀) in the beginning of operation whereby heated water of high temperature is poured for the limited period of time (T₀) in the beginning of operation and thereafter non-heated water is poured.

## Description

### Technical Field

The present invention relates to a coffee liquid extracting apparatus.

### Background Art

There are two methods for obtaining ice coffee. One is the method : to extract, firstly, hot coffee liquid by the use of high temperature water ; then, to cool the extracted coffee liquid. Another is the method : to extract coffee liquid by the use of usual water from the beginning ; then, to cool the extracted coffee liquid into low temperature.

However, in the above former method wherein coffee liquid, extracted by the use of high temperature water, is cooled into low tempeerature ; there is a need of such mighty cooling, after the extraction, as consuming a lot of ice in order to change the coffee liquid extracted by high temperature water into ice coffee. And, in business usage case, such a strong cooling method as an ice making machinery is needed.

As opposed to and as compared with said former method, the latter usual water used method can reduce extracted quantity of such components as astringency, caffeine, sundry taste and the like that deteriorate the taste of coffee liquid. Further, said latter method includes the merit of decreasing oil content to cause the oxidation of coffee liquid. However, the problem of said latter method was that it took a long time for extraction. For instance, in existing methods, it took about one night, namely at least 5 to 8 hours, to extract coffee liquid by the use of water.

Hereby, in order to dissolve said existing fault, the present invention aims to provide the coffee liquid extracting apparatus that can do water-using-extraction ( hereafter this wording means normal-temperature-water-using-extraction ), in short time, of coffee liquid with little content of oil, astringency, caffeine, and sundry taste, with little oxidation tendency, and with good taste and favorable amber color.

Also, the present invention aims to provide the coffee liquid extracting apparatus that can favorably perform water-using-extraction of coffee liquid, and at the same time, can selectively perform hot-water-using-extraction of coffee liquid.

### Disclosure of Invention

To achieve the above object, the coffee liquid extracting apparatus of the present invention comprises an extractor (20) for dripping coffee liquid ; a combined-use decanter (30) arranged quick-connectably-disconnectably under said extractor (20) for storing extraction-use water and receiving the coffee liquid falling from said extractor (20) ; a circulation path (50) and a circulation pump (60) for drawing out the liquid inside said decanter (30) from its bottom, transporting it to the upper part of said extractor (20), and pouring it into said extractor (20) ; a circulating water heater (70) installed on the way of said circulation path (50) ; and a controller (90) for controlling said circulating water heater (70) and said circulation pump (60) ; wherein said controller (90), by making a water-using-extraction-operation-switch (11) on, can drive said circulation pump (60) to circulate coffee liquid for a fixed time (T₁), and at the same time, by making said circulating water heater (70) electrically on for such a fixed time (T₀) as limited by early operartion period, can drive highly heated water to be poured into the extractor (20) for said fixed time (T₀), and then, can make non-heated-water poured into the extractor (20). The above constitution is the first feature of the coffee liquid extracting apparatus of the present invention.

The coffee liquid extracting apparatus of the present invention makes it the second feature that the coffee liquid extracting apparatus comprises an extractor (20) for dripping coffee liquid ; a combined-use decanter (30) arranged quick-connectably-disconnectably under said extractor (20) for storing extraction-use water and receiving the coffee liquid falling from said extractor (20) ; a circulation path (50) and a circulation pump (60) for drawing out the liquid inside said decanter (30) from its bottom, transporting it to the upper part of said extractor (20), and pouring it into said extractor (20) ; a circulating water heater (70) installed on the way of said circulation path (50) ; a controller (90) for controlling such two kinds of operations as water-using-extraction operation for ice coffee usage and hot-water-using-extraction operation for hot coffee usage ; wherein said controller (90), when given instruction of said water-using-extraction operation for ice coffee usage, can drive said circulation pump (60) to circulate coffee liquid for a fixed time (T₁), and at the same time, by making said circulating water heater (70) electrically on for such a fixed time (T₀) as limited by early operation period, can make highly heated water poured into said extractor (20), and then, can make non-heated-water poured into the extractor (20), further, when given instruction of the hot-water-using-extraction operation for hot coffee usage, can drive said circulation pump (60) to circulate coffee liquid for a fixed time (T₂), and at the same time, by making said circulating water heater (70) electrically on, can make highly heated water poured into said extractor (20).

In addition to the above second feature, the coffee liquid extracting apparatus of the present invention makes it the third feature that the coffee liquid extracting apparatus is provided with a cotroller (90) for controlling heat retaining operation also. Said controller (90), when given instruction of heat retaining operation, can drive a circulation pump (60) for a fixed time (T₃) at regular intervals (T₄) with a circulating water heater (70) being electrically on simultaneously.

In addition to any of the above-mentioned first to third features, the coffee liquid extracting apparatus of the present invention makes it the fourth feature that the coffee liquid extracting apparatus is provided with a combined-use decanter (30) whose bottom part is equipped with an outlet portion (33) having a valve body (34) ; when the combined-use decanter (30) is mounted in place, said outlet portion (33) is made to connect with a circulation path (50) ; at the same time, the valve body (34) throws open the outlet portion (33) ; and when the combined-use decanter (30) is moved out of place, the valve body (34) closes up the outlet portion (33).

Further, the coffee liquid extracting apparatus of the present invention makes it the fifth feature that the coffee liquid extracting apparatus is provided with a water-using-coffee-liquid-extracting-portion (100) that comprises : an extractor (120) for dripping coffee liquid after being added roasted and ground coffee bean powder, a combined-use tank (130) situated below the position of said extractor (120) for holding water of extraction-use and (at the same time) receiving extracted liquid dropping from said extractor (120), a coffee-liquid-takeout-port (170) connected to said combined-use tank (130) for (quick-openably-closeably) taking out coffee liquid from said tank (130), a circulation path (150) and a circulation pump (152) for (firstly) transporting the liquid in said combined-use tank (130) to the upper part of said extractor (120) and for (secondly) pouring the liquid into said extractor (120), a circulating water heater (154) installed on the way of said circulation path (150), and a controller (190) ; wherein, the controller (190) has a high-temperature-water-pouring-mode and a non-heated-water-pouring-mode, the former mode being characterized by that both said circulation pump (152) and said circulating water heater (154) are made to be electrically on (for such a fixed time (T₁₁) as limited by early operation period) in order that high temperature water may be poured into said extractor (120), the latter mode being characterized by that (for a fixed time (T₁₃) after said time T₁₁) only said circulation pump (152) is made to be electrically on in order that non-heated-water may be poured into said extractor (120).

Further, in addition to said fifth feature, the coffee liquid extracting apparatus of the present invention makes it the sixth feature that the coffee liquid extracting apparatus is provided with a controller (190) having a standby mode characterized by that both a circulation pump (152) and a circulating water heater (154) are made to be stopped for a fixed time (T₁₂) between the high-temperature-water-pouring-mode and the non-heated-water-pouring-mode.

Further, in addition to said fifth or sixth feature, the coffee liquid extracting apparatus of the present invention makes it the seventh feature that the coffee liquid extracting apparatus is provided with a water introducing pipe (140) for introducing city water into a combined-use tank (130), an open-shut-valve (143) and a water quantity sensor (144) to be installed on said pipe (140), and a controller (190) ; wherein, the controller (190) has a feeding water mode that is characterized by that the valve (143) on the pipe (140) is opened to introduce city water of predetermined water quantity into the tank (130) in advance of the beginning of extraction operation, namely, until said sensor (144) detects the predetermined water quantity.

Further, in addition to said seventh feature, the coffee liquid extracting apparatus of the present invention makes it the eighth feature that the controller (190) of this coffee liquid extracting apparatus ; firstly, when a operation switch (181) was put on, has the water-feeding-mode implemented ; secondly, when the water-feeding-mode finished, has the high-temperature-water-pouring-mode implemented automatically ; thirdly, when the high-temperature-water-pouring-mode finished, has the standby mode implemented automatically ; and fourthly, when the standby mode finished, has the non-heated-water-pouring-mode implemented automatically.

Further, in addition to said eighth feature, the coffee liquid extracting apparatus of the present invention makes it the ninth feature that the duration time (T₁₁) of the high-temperature-water-pouring-mode, the duration time (T₁₃) of the non-heated-water-pouring-mode, and the duration time (T₁₂) of the standby mode are respectively made to be freely adjusted predeterminately.

Further, in addition to said ninth feature, the coffee liquid extracting apparatus of the present invention makes it the tenth feature that the duration time (T₁₁) of the high-temperature-water-pouring-mode and the duration time (T₁₃) of the non-heated-water-pouring-mode are respectively, instead of being predetermined by time, decided to be the predetermined time required for fixed high-temperature-water pouring quantity to be poured and the predetermined time required for fixed non-heated-water pouring quantity to be poured.

Further, the coffee liquid extracting apparatus of the present invention makes it the eleventh feature that the coffee liquid extracting apparatus is provided with a roasting and milling portion (200) at the middle position of the apparatus ; and with said roasting and milling portion (200) inbetween, on one side, it is also provided with a water-using-coffee-liquid-extracting portion (100), and on the other side, it is also provided with a hot coffee liquid extracting portion (300) that extracts coffee liquid by the use of high-temperature-water and retains and supplies that liquid ; wherein said roasting and milling portion (200) is provided with a coffee bean roasting device (220), and a pulverizing device (230) that receives roasted coffee bean from said roasting device (220) and pulverizes said roasted coffee bean, and also a takeout-port (240) that receives pulverized coffee bean from said pulverizing device (230).

In said invention having the first feature ; filter paper is set into the extractor (20), roasted and milled coffee bean powder is put into the extractor (20), and on the other hand, a fixed quantity of water of extraction-use is put into the combined-use decanter (30). With said combined-use decanter (30) being set into the predetermined position of the apparatus, coffee liquid extraction arrangements are made. And then, when the extraction switch is put on, the controller (90) starts. And the circulation pump (60) and the circulating water heater (70) are made to be electrically on. Thereby, the water in the combined-use decanter (30) circulates through the circulation path (50) into the extractor (20) side. And, for a fixed time (T₀) as limited by early operation period, said circulating water heater (70) is made to be electrically on, so that in such a period, the water from said combined-use decanter (30) becomes to be highly heated by means of said circulating water heater (70), and is poured into the extractor (20). With the help of this high-temperature-water, the coffee bean powder in the extractor (20) becomes to be expanded adequately into the inside of the powder. Thus extraction arrangements are settled. When pouring of high-temperature-water at such an early period was finished, in turn, non-heated water from combined-use decanter (30) circulates and is poured into the extractor (20). Coffee bean powder is now adequately expanded and wet thanks to the high-temperature-water of said early period, and thus extraction arrangements are ready. So that, only by pouring usual water, adequate extraction can be attained ; extracted coffee liquid from the extractor (20) drips into the combined-use decanter (30). For a fixed time (T₁) while said circulation pump (60) is electrically on ; the liquid within the combined-use decanter (30) repeats circulation and extraction to and from the extractor (20) for several times, and as a result, in such a short time as about 10 to 20 minutes, extraction is adequately processed and finishes.

In accordance with the coffee liquid extracting apparatus of the present invention having said first feature, the coffee liquid extracting apparatus is provided with the extractor (20), the combined-use decanter (30), the circulation path (50) and the circulation pump (60), the circulating water heater (70), and the controller (90) for controlling said heater (70) and pump (60). Said controller (90) has such a constitution as : firstly, by putting on the water-using-extraction operation switch (11), can drive said circulation pump (60) to circulate the liquid for a fixed time (T₁) ; secondly, by putting on said circulating water heater (70) for a fixed time as limited by early operation period, can make the highly heated water poured into the extractor (20) for a fixed time (T₀) as limited by early operation period ; and thirdly, can make non-heated-water poured into the extractor (20). Owing to the above constitution of the controller (90) ; at first, by means of high-temperature-water, the coffee bean powder gets expanded to meet adequately the condition of extraction, and then, the powder can be extracted by usual water. Accordingly, essentially, the extraction by the use of usual water becomes feasible, and at the same time, the extraction can be completed within a short time. Thanks to usual water usage, the coffee liquid, of little astringency and caffeine and sundry taste, of good taste, of little oil content and oxidation tendency, of favorable amber color, of good flavor, and ice-coffee itself can be provided within a short time. Further, as business purpose, mighty cooling equipment becomes unnecessary, and resultingly, ice coffee can be obtained with small electric power and at low cost.

Further, according to the coffee liquid extracting apparatus of the present invention having said first feature, the extraction is carried out by circulating and heating the water of extraction use, so that the liquid once extracted becomes circulated again into the extractor (20). Accordingly, the extraction time as a whole can be shortened.

In said invention having the second feature, the arrangement of coffee liquid extraction can be settled by that **:** filter paper is set in the extractor (20) ; necessary cups of roasted and ground coffee bean powder is put into the extractor (20) ; on the other hand, a fixed quantity of water (for extraction-use) corresponding to said necessary cups of coffee bean powder is put into the combined-use decanter (30) ; and the decanter (30) is set at the predetermined position of the apparatus. And when instruction of water-using-extraction operation is given ; by the use of controller (90), the circulation pump (60) and the circulatin water heater (70) are made to be electrically on. Thereby, the water in the combined-use decanter (30) circulates toward the extractor (20) side through the circulation path (50). Because, for such a fixed time (T₀) of early operation period, said circulating water heater (70) is made to be electrically on ; in that while, the water from said combined-use decanter (30) gets heated to high temperature by the circulating water heater (70) and is poured into the extractor (20). By means of this high temperature water, the coffee bean powder in the extractor (20) becomes such a state as adequately expanded to the inside of the powder, and arrangements of extraction get prepared. When a fixed time (T₀) of early operation period has passed, the circulating water heater (70) becomes put off ; after that, non-heated-water circulates and is poured into the extractor (20). The coffee bean powder has been adequately expanded and moistened, and is ready for being extracted, thanks to said high temperature water of early operation period ; accordingly, even by pouring usual water, adequate extraction can be carried out and the extracted coffee liquid from the extractor (20) drips into the combined-use decanter. For a fixed time (T₁) while said circulation pump (60) is being electrically on, the liquid in the combined-use decanter (30) makes plurality of circulation toward the extractor (20), repeats extractions, and after a fixed time (T₁), finishes the extraction behavior.

On the other hand, when the instruction of hot-water-using-extraction operation is given ; by the use of the controller (90), the circulation pump (60) and the circulating water heater (70) are made to be electrically on for a fixed time (T₂). Thereby, highly heated water continues circulations for said fixed time (T₂), and is made to be poured into the extractor (20). Thus the extraction is carried out.

According to the coffee liquid extracting apparatus of the present invention having said second feature, the operational control of the controller (90) is constituted as follows : namely, when the instruction of water-using-extraction operation for ice coffee use is given ; the controller (90) drives the circulation pump (60) to circulate the liquid for a fixed time (T₁), at the same time makes said circulating water heater (70) electrically on for a fixed time (T₀) of early operation period, in that while pours highly heated water into said extractor (20), and after then pours non-heated-water into the extractor (20). On the other hand, when the instruction of hot-water-using-extraction operation for hot coffee use is given ; the controller (90) drives the circulation pump (60) to circulate the liquid for a fixed time (T₂), at the same time makes said circulating water heater (70) electrically on, and pours highly heated water into said extractor (20).

So that **:** both operations of water-using-extraction operation for ice coffee use and hot-water-using-extraction operation for hot coffee use can be performed by the combined-use of one unit of apparatus. And at water-using-extraction operation ; as the circulating water heater (70) is made to be electrically on for a fixed time (T₀) of early operation period, coffee bean powder can be extracted at adequately expanded and wet condition, namely, in spite of water-using-extraction, it can be extracted effectively and efficiently in a short time. Thanks to water-using-extraction operation, the coffee liquid with little astringency, caffeine, sundry taste and oil content, and with good taste and flavor can be obtained, and further, the cooling into ice coffee can be done in a short time.

In said invention having the first and second features, the fixed time (T₁) at water-using-extraction operation means the very total time of water-using-extraction operation, and can be made to be about 10 to 20 minutes for instance. However, it can be changed in response to the scale of the apparatus or extracted coffee bean powder quantity. So that it is possible ; firstly, to decide beforehand by experiment the suitable fixed time (T₁) in correspondence to the scale of the apparatus, or to decide the fixed time (T₁) in correspondence to coffee bean powder quantity to be extracted, and secondly, to enable changing of such a time (T₁). It should be noted here that said fixed time (T₁) is far short time as compared with the existing long time of about a half or a day.

Further, a limited fixed time (T₀) of the early period at water-using-extraction operation is the very time in which high temperature water is poured in early operation period, namely, the required minimum time needed for coffee bean powder in the extractor to expand and moisten by this high temperature water. Said limited fixed time (T₀) at the early operation period, can be decided to be, for instance, about 10 to 20 seconds up to about few minutes. Naturally, said time (T₀) can be decided beforehand by experiment in correspondence to the scale of the apparatus or the heating capability of the circulating water heater (70), or, can be stepwisely or continuously changed in accordance with coffee bean powder quantity to be extracted. Further, the heating at said fixed time (T₀) can be done, for instance, by pouring of highly heated water of 95°C ; by pouring of highly heated water of at least more than about 80°C, expanding and wetting coffee bean powder can be effectively done.

Further, aforementioned fixed time (T₂) at hot-water-using-extraction operation is the very total time of hot-water-using-extraction, and can be decided to be, for instance, 5 to 6 minutes up to 10 to 20 minutes ; however, the shorter time than said water-using-extraction operation case will do. This fixed time (T₂) at hot-water-using-extraction operation can also be determined beforehand by experiment in accordance with the scale of the apparatus or the heating capability of the circulating water heater (70), or can be changed stepwisely or continuously in accordance with the coffee bean powder quantity to be extracted.

Heating of extraction-use-water at hot-water-using-extraction operation, can be made to be, for instance, about 95°C ; however, highly heated water exceeding about 80°C can perform extraction favorably and effectively.

In the coffee liquid extraction apparatus of the present invention having said third feature ; when the instruction of heat retaining operation is given, the controller (90) drives the circulation pump (60) for a fixed time (T₃) at a fixed interval (T₄), and in that while of the time (T₃), the controller (90) makes the heater (70) electrically on. Thereby, the coffee liquid stored within the combined-use decanter (30) is made to be circulated through the circulation path (50) for the fixed time (T₃) at the fixed interval (T₄) ; in that while, said liquid is reheated by the circulating water heater (70) and is kept at a suitable temperature. At this heat retaining operation, extraction-finished coffee bean powder and filter paper that are remaining in the extractor (20) can be removed in advance. In this heat retaining operation ; the fixed time (T₄) for heating to be stopped, namely the interval time (T₄) can be decided to be, for instance, 1 to 10 minutes or so ; the fixed time (T₃) necessary for circulation and heating can be decided to be the time the coffee liquid in combined-use decanter (30) requires for more than one circulaion or so, namely it can be decided to be, for instance, 1 to 5 minutes. However, either the time (T₃) or the time (T₄) is free of limitation, and several predetermined times can be made to be selected.

Heating power by circulating water heater (70) at heat retaining operation can be lower than hot-water-using-extraction operation case. The heat retaining is for the sake of coffee liquid, so that if the coffee liquid is heated up to some reasonable heat retaining temperature, it will be allowed. For instance, circulating water should be heated to reach about 70°C to 85°C.

According to the coffee liquid extracting apparatus having said third feature ; the apparatus can ( in addition to the effect by the constitution described in said second feature ) perform heat retaining of the coffee liquid that has already received hot-water-using-extraction, in addition to water-using-extraction and hot-water-using-extraction. Or there is such a case wherein the apparatus can offer coffee liquid after changing once usual-water-usingly-extracted coffee liquid into hot coffee liquid in response to the needs.

In the coffee liquid extracting apparatus having said fourth feature ; when the combined-use decanter (30) is mounted in place, the outlet portion (33) of the combined-use decanter (30) communicates with the circulation path (50) side. And in such a state, the circulation for extraction operation or heat retaining operation becomes feasible ; on the other hand, when the decanter (30) is made to be out of mounted state for pouring coffee liquid into coffee cups or the like, the valve body (34) of the outlet portion (33) of the decanter (30) closes up the outlet portion (33), thereby preventing the liquid from leaking out of the bottom of the decanter (30).

According to the coffee liquid extracting apparatus having said fourth feature ; in addition to the effect by any of said first to third features, the outlet portion (33) equipped with the valve body (34) is provided at the bottom of the combined-use decanter (30). And by mounting the decanter (30) in place ; said outlet portion (33) communicates with the circulation path (50) side, and at the same time, the valve body (34) opens the outlet portion (33). And by making the decanter (30) out of mounted state ; the valve body (34) is made to close up the outlet portion (33). Accordingly, the combined-use decanter (30) can be given three kinds of roles : the first role being a extraction-use-water reserving container, the second role being a container for receiving extracted coffee liquid, and the third role being a coffee server from which to pour coffee liquid into coffee cups and the like. Further, said apparatus can carry out without difficulty an efficient water-using-extraction or hot-water-using-extraction keeping the extraction-use water circulating. Or, it can perform heat retaining operation keeping the extraction-use water circulating.

According to said fifth feature ; when the extraction operation is commenced at the water-using-coffee-liquid-extracting-portion (100), by means of the controller (190), the operation mode is made to be the high temperature water pouring mode ; so that the circulation pump (152) is made to be electrically on, and at the same time, the circulating water heater (154) is made to be electrically on. Thereby, the water in the combined-use tank (130) circulates toward the extractor (120) side passing through the circulation path (150), and the high temperature water is poured into the extractor (120) that is, beforehand, equipped with filter paper and the like and is brought in a predetermined quantity of already roasted coffee bean powder and is in set-condition. High temperature water is poured into the extractor (120) only in a limited fixed time (T₁₁) of early operation period. Thereby, the high temperature water pouring mode finishes. By being poured by a suitable quantity of high temperature water, the coffee bean powder in the extractor (120) is made to be steamed, adequately expanded to the inside, and the arrangements of extraction become prepared. When said high temperature water pouring mode at early operation period has been finished ; in turn, or after later described steaming waiting time (T₁₂), the operation mode is made to be the non-heated-water pouring mode by means of the controller (190) ; with only the circulation pump (152) becoming on-condition. Thereby, non-heated water is poured into the extractor (120), circulating from the combined-use tank (130). Coffee bean powder is already in an adequately expanded and wet condition thanks to the pouring of high temperature water at said high temperature water pouring mode and in a suitable condition to be extracted ; so that, in succeeding non-heated-water pouring mode, only pouring non-heated water can implement adequate and speedy extraction.

The extracted coffee liquid from the extractor (120) drips into the combined-use tank (130). In said non-heated water pouring mode, the total quantity of the water of the combined-use tank (130) is made to circulate toward the extractor (120) once or plural times, and the extraction by the same water in the combined-use tank (130) is made to repeat once or plural times, and then the extraction finishes.

The water-using-extraction coffee liquid that has been dripped into the combined-use tank (130) and is retained there, is then poured into cups and the like by opening the coffee-liquid-takeout-port (170) that is connected to the combined-use tank (130), and is further cooled with ice and the like for ice coffee usage, and is placed for drinking.

According to the coffee liquid extracting apparatus of the present invention having the fifth feature ; at first, coffee bean powder is made to be expanded and moistened to lead to the condition adequately suitable for being extracted, by the use of high temperature water, and then, it can be extracted by the use of usual water. As a result, good coffee liquid can be obtained by making the best use of the advantage of water-using-extraction. Namely, the coffee liquid of little astringency, caffeine, sundry taste, and oxidation tendency, with favorable flavor, and with amber color can be obtained. And also, as compared with the case wherein extraction is done only by usual water from the beginning to the end, extraction time can be exceptionally shortened. Naturally, it is possible to make tasty ice coffee from water-using-extraction coffee liquid very simply and speedily.

Further, in business usage also, mighty cooling equipment becomes unnecessary, and ice coffee can be obtained at saved electric power and at low cost.

Further, according to coffee liquid extracting apparatus having the fifth feature ; as the extraction can be carried out with extraction-use water being circulated, once extracted liquid is made to circulate again toward the extractor (120) ; so that, the extraction time as a whole can be adequately shortened.

In said fifth feature, high temperature water can be made to be, for instance, about 95°C ; however, by pouring high temperature water higher than about 80°C, the extraction preparation by steaming, expanding and moistening of coffee bean powder can be done effectively.

The fixed time (T₁₁) needed to perform the high temperature water pouring mode ( namely, high temperature water pouring mode continuing time ) is decided to be such a comparatively short time as, for instance, about 10 seconds to few minutes. However, the time (T₁₁) is not necessarily limited to some value. In short, it is the time necessary for such a quantity of high temperature water to be poured as enabling coffee bean powder in the extractor (120) to be adequately steamed and expanded. This time can be suitably decided by experiment beforehand. Or each of other several kinds of suitable times may be decided by experiment beforehand, and may be selected from among these times ; wherein these times are the times in accordance with such kinds of circumstances as coffee bean powder quantity to be extracted, roasted condition, high temperature water poured quantity ( per unit time ) by the circulation pump (152), and the temperature of high temperature water. Further, it may be also possible for the user to freely change the time setting in accordance with such kinds of circumstances as said roasted coffee bean powder quantity to be extracted and roasted condition. In this case, several means can be considered when setting the time (T₁₁), including such means as enabling the setting to be performed freely ( for instance, enabling setting the time (T₁₁) (of 10 seconds to 20 minutes) with adjustment interval of 10 seconds ).

In said fifth feature, the fixed time (T₁₃) for performing the non-heated-water-pouring-mode ( namely, non-heated-water-pouring-mode continuing time ) can be decided to be, for instance, about few minutes to several ten-minutes ; however, this continuing time (T₁₃) is not necessarily limited to some value. In short, it is the time needed for coffee liquid to be really and adequately extracted, and can be decided suitably by experiment beforehand. Or each of other several kinds of suitable times ( necessary for extraction ) may be decided by experiment beforehand, and may be selected from among these times ; wherein these times are the times in accordance with such kinds of circumstances as roasted coffee bean powder quantity to be extracted, roasted condition, and non-heated water poured quantity ( per unit time ) by the circulation pump. Further it may be also possible for the user to change the time setting freely ( for instance, few minutes to several hours ) in accordance with such kinds of circumstances as said roasted coffee bean powder quantity to be extracted and roasted condition. Anyway, the time (T₁₃) of the non-heated-water-pouring-mode in the present invention is a far shorter time as compared with such an existing long time as a half day or a day.

According to the coffee liquid extracting apparatus of the present invention having the sixth feature, in addition to the effect of the fifth feature ; when the high-temperature-water-pouring-mode was finished, operation mode is once made to be the standby mode by means of the controller (190). By being provided with such a standby mode, low-temperature-non-heated-water pouring becomes standby state in said standby mode time. So that, the temperature of coffee bean powder is not made to be lowered, and is made to be adequately steamed, expanded and moistened by already poured high temperature water ; thus, the coffee bean powder is made to be in the condition suitable for being extracted. Accordingly, in succeeding non-heated-water-pouring-mode, only pouring of usual water can promote the extraction adequately and speedily.

In the sixth feature, the fixed time (T₁₂) for performing said standby mode, as the continuing time (T₁₂) of the standby mode, can be decided to be ( for instance ) about 10 seconds to few minutes ; in short, it is the time necessary for the coffee bean powder in the extractor (120) to be adequately steamed, expanded, and to become an easily extractable state thanks to high temperature water. This time (T₁₂) can be decided by experiment to be a suitable time, as same as the case of said high temperature water pouring mode or non-heated-water pouring mode. Further, as said time (T₁₂), a suitable time, in accordance with the situations including extracted-roasted-coffee-bean-powder quantity, roasted condition, and high temperature water pouring quantity per unit time by the circulation pump, may be procured beforehand, and then, selected as occasion may demand. Or, it should be allowed that the user changes the time setting freely in accordance with the situations including said extracted-roasted-coffee-bean-powder quantity and roasted condition.

According to the coffee liquid extracting apparatus of the present invention having said seventh feature ; by possessing a feedwater mode as the control constitution by the controller (190), the needs for the user himself to put water into the combined-use tank (130) and to set the tank is removed. When the operation switch is put on, at first, the mode becomes the feedwater mode. In accordance with the instruction from the controller (190), the open-shut-valve (143) of the water introducing pipe (140) is opened, and the water from the city water system enters the combined-use tank (130) through said pipe (140), by city water system pressure. The quantity of the water entering said tank (130) is detected by the water quantity sensor (144) ; when the set water quantity has been supplied, the valve (143) is closed by the controller (190), and the water feeding finishes. The feedwater quantity to said tank (130) is made to be set beforehand in accordance with the quantity of the coffee bean powder that is to be extracted by the user.

In accordance with the coffee liquid extracting apparatus of the present invention having said eighth feature ; after installing filter paper and the like in the extractor (120) and putting roasted coffee bean powder into the same extractor (120) and setting the extractor on the apparatus ; when the operation switch (181) is put on, at first, set quantity of water is fed to the combined-use tank (130) ; after its ending, the circulation pump (152) and the circulating water heater (154) are made to be electrically on, and high temperature water is poured into the extractor (120) for a fixed time (T₁₁) of early operation period ; after its ending, once the mode becomes the standby mode, and in that while, the steaming of coffee bean powder is done ; when said standby mode has been finished, in turn, only the circulation pump (152) becomes electrically on ; non-heated-water from the combined-use tank (130) circulates and is poured into the extractor (120), water-using-extraction is carried out. When the extraction time (T₁₃) by non-heated-water has been finished, a series of operation behavior comes to the end. The above eighth feature enables automation of a series of operation from feeding water to extraction, and is so convenient.

Further, according to the coffee liquid extracting apparatus of the present invention having the ninth feature ; the continuing time (T₁₁) of the high temperature water pouring mode, the continuing time (T₁₃) of the non-heated-water pouring mode, and the continuing time (T₁₂) of the standby mode are made respectively to be adjusted and set suitably in accordance with such various conditions as the kind of coffee bean, pulverized degree of coffee bean powder, quantity of coffee bean powder to be extracted, thickness and taste of extracted coffee liquid, temperature of non-heated-water and high temperature water, and pouring flow quantity to the extractor ; and thus, favorable water-using-extraction coffee liquid can be obtained.

In accordance with the coffee liquid extracting apparatus of the present invention having said tenth feature ; the continuing time (T₁₁) of high temperature water pouring mode and the continuing time (T₁₃) of non-heated-water pouring mode are not respectively set by merely times, but respectively set by the time until the set pouring quantity of high temperature water has been really poured and the time until the set pouring quantity of non-heated-water has been really poured ; so that, the extraction operation more conforming to real needs can be realized. Namely, in order that the coffee bean powder may be steamed, expanded and made to be the most suitable condition to extraction, the most suitable quantity of high temperature water in correspondence to coffee bean powder quantity becomes needed ; and the above apparatus having the tenth feature enables the most suitable quantity of high temperature water to complete surely the high temperature water pouring mode just at the time when pouring has been finished ; so that, over-pouring of high temperature water can be avoided, and the most suitable steamed condition of coffee bean powder to its extraction can be expected ; whereas the case of mere time setting brings about overs and shorts of pouring quantity. As to the non-heated water pouring mode, also, it enables accurate extraction for the continuing time of non-heated-water pouring mode to be set by the use of non-heated-water quantity that really extracts coffee liquid from coffee bean powder.

According to the coffee liquid extracting apparatus of the present invention having said eleventh feature ; by the use of the roasting and milling portion (200) that is installed in the middle part of the apparatus, coffee raw bean can be roasted and milled and also pulverized, and as a result, roasted and milled coffee bean powder to be extracted can be obtained ; obtained coffee bean powder is set to the water-using coffee liquid extracting portion (100) next to the roasting and milling portion (200) or set to the hot coffee liquid extracting portion (300) differently next to the roasting and milling portion (200), according to which (ice-coffee or hot-coffee ) is to be prepared ; thus, water-using-extraction coffee liquid for ice-coffee-use or hot-coffee itself can be obtained very conveniently, easily, simply, and speedily. Naturally, adequately cooled ice-coffee can be obtained easily and promptly by adding ice and the like to the water-using-extraction coffee liquid produced by water-using coffee liquid extracting portion (100).

### Brief Description of Drawings

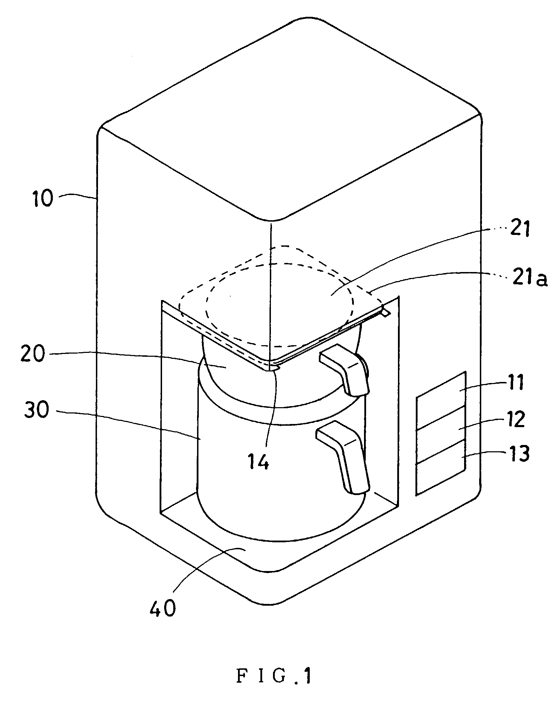

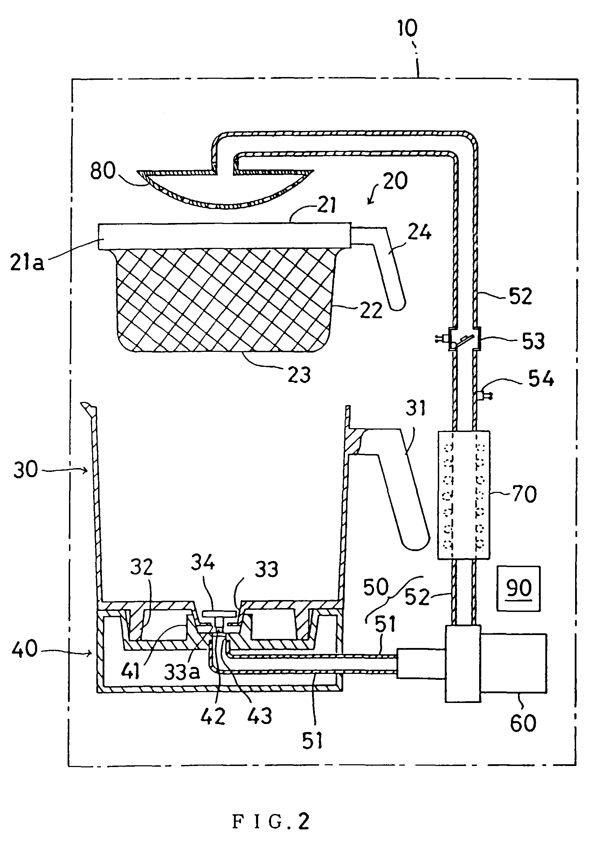

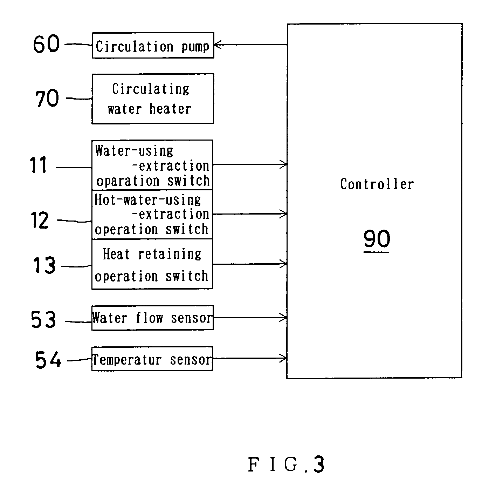

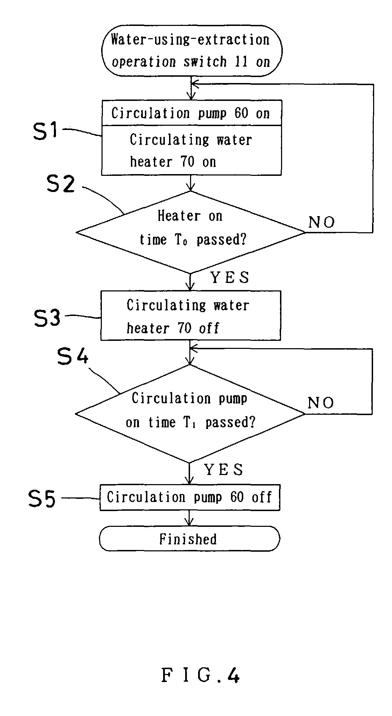

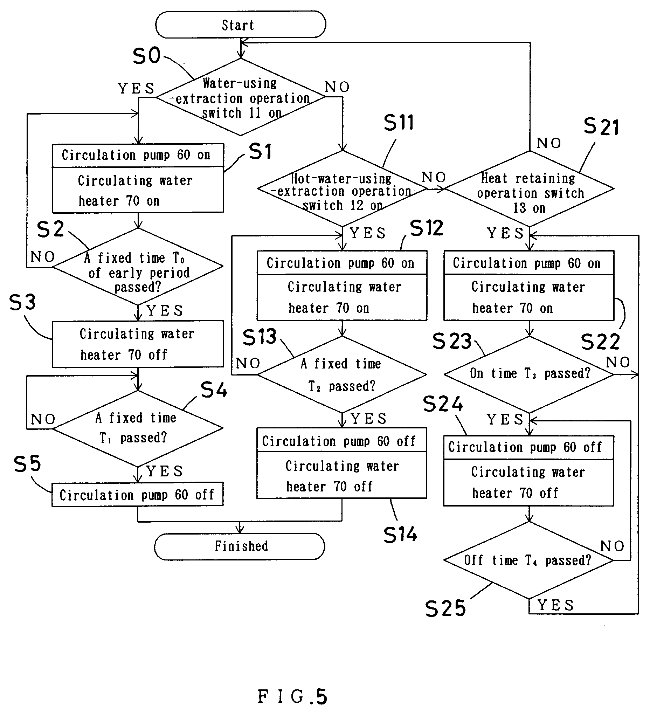

Figs. 1 to 5 show an example of the desirable coffee liquid extracting apparatus of the present invention. Fig.1 is a perspective view of the whole of the apparatus. Fig.2 is a vertical sectional and diagrammatic structural view of the coffee liquid extracting apparatus. Fig.3 is a block diagram showing the control system of each portion of the apparatus, by the controller. Fig.4 is a flow chart illustrating the operational control structure, by the controller. Fig.5 is a flow chart illustrating the other operational control structure, by the controller.

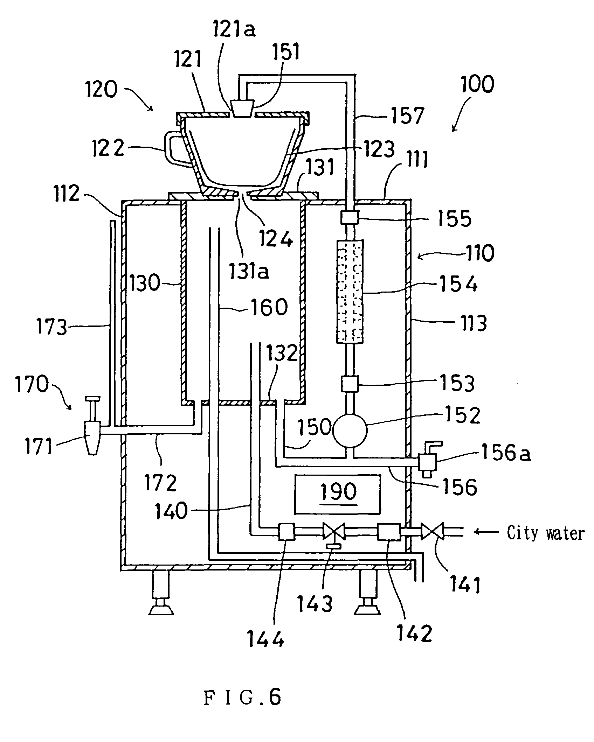

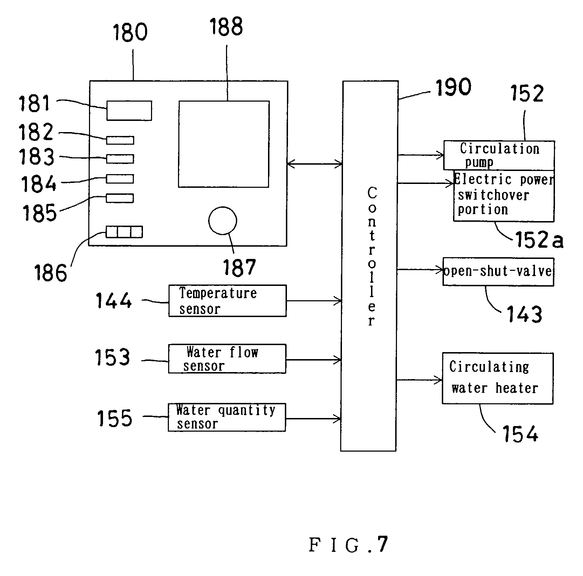

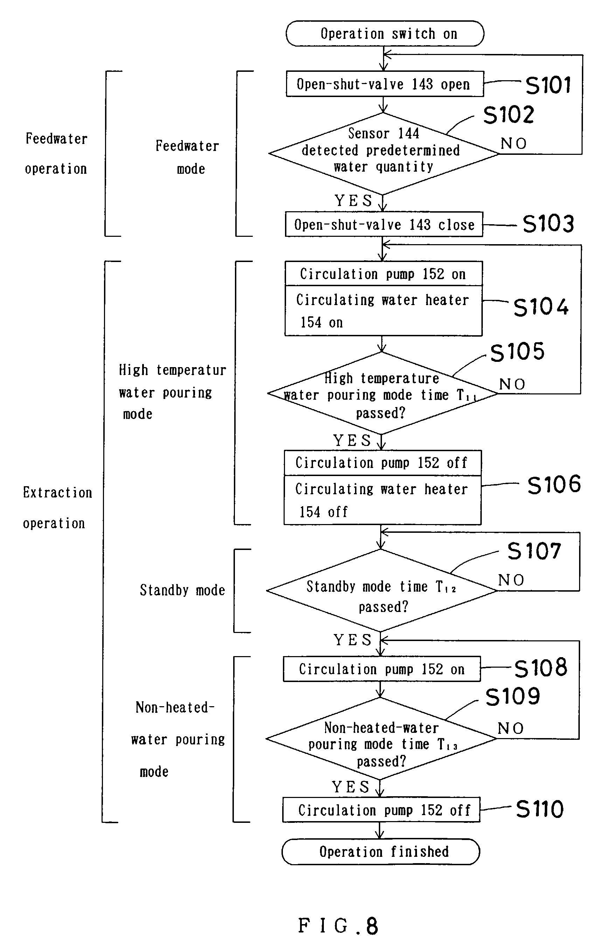

Figs. 6 to 8 show another example of the desirable coffee liquid extracting apparatus of the present invention. Fig.6 is a diagrammatic vertical sectional view of the apparatus. Fig.7 is a drawing showing the relation between the controller and each portion of the apparatus. Fig.8 is a flow chart showing an operational control example of the apparatus, by the controller.

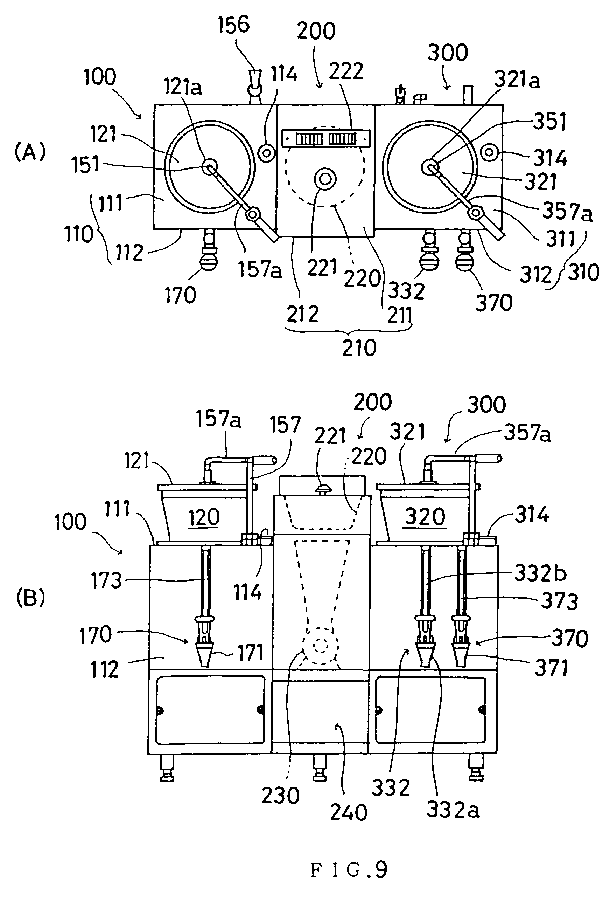

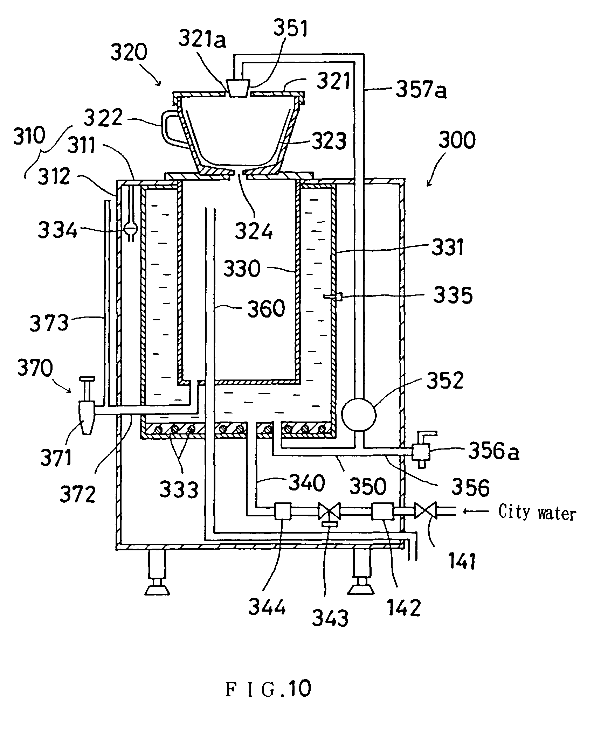

Figs. 9 and 10 show a still other example of the desirable coffee liquid extracting apparatus of the present invention. Fig.9 shows the coffee liquid extracting apparatus provided with the water-using-coffee-liquid-extracting-portion as shown in Fig.6 together with the hot-coffee-liquid-extracting-portion and the roasting and milling portion ; (A) being a plan view of the apparatus, and (B) being a front view of the apparatus. Fig.10 is a diagrammatic vertical sectional view of the hot-coffee-liquid-extracting-portion.

### Best Mode for Carrying Out the Invention

Referring to Figs. 1 to 5, an example of the desirable coffee liquid extracting apparatus of the present invention will be explained hereunder.

In Fig.1, inside a case 10, an extractor 20 is quick-connectably-disconnectably installed, and a combined-use decanter 30 is quick-connectably disconnectably mounted on a base 40. Said extractor 20 can be installed in a case 10, with a flange 21a at the circumference of a upper opening 21 of the extractor 20 being jointed to a hook-shaped projection 14.

Further, on a part of the external surface of the case 10, a water-using-extraction operation switch 11, a hot-water-using-extraction operation switch 12, and a heat retaining operation switch 13 are arranged.

Further, in the case 10, a circulation path 50 consisting of pipes 51 and 52, a circulation pump 60, a circulating water heater 70, a water pourer 80, and a controller 90 and others ( that are described later ) are installed.

Fig.2 is a vertical sectional and diagrammatic structural view of the coffee liquid extracting apparatus. As Fig.2 shows, said extractor 20 is a thing for dripping coffee liquid whose inside is covered by filter paper and whose further inside is charged with roasted and milled coffee bean powder, and said extractor 20 is quick-extractably attached to the case 10 with the flange 21a. In this example, in the extractor 20, a side circumferential portion 22 and a bottom portion 23 except the upper opening 21 are constructed by the use of a metal netting with coarse meshes. Naturally, instead of such a coarse meshed metal netting, a coarse meshed punching metal or a coarse meshed plastic cage or other coarse meshed materials can be used. Thereby, the area contacting with the filter paper attached to the inside is made small, and the liquid that passed through the filter paper is made to drop into the combined-use decanter (30) and to be contained there smoothly without being hindered by the extractor 20. 24 stands for a handle. Said extractor 20 is not limited to such a thing as illustrated here, but one of the existing various extractors can be selected for it. Namely, if any extractor is constructed such that it can be attached with filter paper, can contain coffee bean powder, can extract coffee liquid by being poured with warm water, and can drop extracted liquid from the bottom ; such an extractor is able to fulfill its role in outline.

Said combined-use decanter 30 is a container for receiving the coffee liquid that has been dropped from said extractor 20, and is also a container for storing the water of coffee liquid extraction-use, and is mounted under said extractor 20 quick-connectably-disconnectably. Namely, it is mounted quick-insertably-removably on the base 40 fixed to said case 10.

The combined-use decanter 30 is also a coffee server, is provided with a handle 31 on its outside, and is provided with a grounding portion 32 on its bottom outside.

At the bottom of the combined-use decanter 30, an outlet portion 33 is provided, and the outlet portion 33 is made to be watertightly inserted into an insert receiver 41 of the base 40 side by that the outlet portion 33 is mounted on the base 40. Said outlet portion 33 is equipped with a valve body 34 ; and except the case wherein the outlet portion 33 is inserted into the insert receiver 41, the valve body 34 is made to close an outlet 33a of the outlet portion 33 by energized spring power or by the valve body self weight.

Said base 40 is a stand on which to mount said combined-use decanter 30, and is provided with said insert receiver 41. Said insert receiver 41 is equipped with a push-up projection 42 that opens the outlet 33a by pushing up said valve body 34 when the outlet portion 33 of said decanter 30 is inserted, and further, the insert receiver 41 is provided with a penetration hole 43 to connect with a pipe 51 of said circulation path 50.

It should be noted here that the constitution consisting of the outlet portion 33, the outlet 33a, the insert receiver 41 of the base 40, the push-up projection 42, the penetration hole 43, and the pipe 51 of the circulation path 50 is not limited to the constitution illustrated in this example. In short, any constitution will do ; if the outlet portion 33 of the bottom of the decanter 30 becomes connected with the pipe 51 of the circulation path 50 ( by having the combined-use decanter 30 mounted ), and if the valve body 34 becomes to close the outlet portion 33 of the decanter 30 ( by having the combined-use decanter 30 removed from the mounted state when pouring coffee liquid into coffee cups and the like ).

Said circulation path 50 is the passage by which to circulate the liquid inside the combined-use decanter 30 and to pour it into the extractor 20 through said pourer 80, and said path 50 has the pipe 51 that is connected with the penetration hole 43 of the insert receiver 41 of the base 40, and has a pipe 52 that is extended from the discharge side of the circulation pump 60 to said pourer 80.

The circulation pump 60 is installed on the way of the circulation path 50 ; by the pump 60 being driven, the liquid inside the decanter 30 is made to go through the circulation path 50 and to be poured into the extractor 20 after passing through the pourer 80.

Said circulating water heater 70 is installed on the downstream from the circulation pump 60, heats the water circulating through the circulation path 50, and changes the water instantaneously into high temperature state.

Said pourer 80 pours the liquid sent through the circulation path 50 sprinklingly and uniformly into the extractor 20. The shape of the pourer 80 is not especially restricted.

Further, in the above, it may be possible that ; the pipe 52 of the circulation path 50 is made to install a water flow sensor 53 for detecting the existence or non-existence of the water flow in the pipe 52, and the sensor 53 is made to make the circulating water heater 70 electrically on in only the case of water flow occurrence, thereby keeping safety. Or it may also be possible to install a temperature sensor 54 to detect the temperature of the circulating water passing through the pipe 52 of said circulation path 50.

Referring to Fig.3 that is a block diagram showing the control system of each portion of the apparatus, the function of said controller 90 will be explained hereunder. The controller 90 has a microcomputer built-in. And the microcomputer has prescribed software ( namely program ) in correspondence to each of the water-using-extraction operation, hot-water-using-extraction operation, heat-retaining operation, and the like. The controller 90 inputs the switch-signal from said water-using-extraction operation switch 11, hot-water-using-extraction operation switch 12, or heat retaining operation switch 13 ; inputs the sensor-information-signal from said water flow sensor 53, temperature sensor 54, or the like ; then in accordance with the program in response to each kind of operation, outputs prescribed control instruction to the circulation pump 60, the circulating water heater 70, or the like.

Referring to Fig.4, a desirable example of the coffee liquid extraction operation by the controller 90 will be explained hereunder. The flowchart shown in Fig.4 is such a control flowchart of coffee liquid extraction operation in the apparatus that has no operational function by the hot-water-using-extraction operation switch 12 or the heat-retaining operation switch 13 ( as shown in Fig.1 or Fig.3 ), namely the flowchart shown in Fig.4 is such a control flowchart of coffee liquid extraction operation in the apparatus that has only the water-using-extraction operation switch 11 and can perform only water-using-extraction operation.

Following Fig.4 ; filter paper is now set in the extractor 20, roasted and milled coffee bean powder is put into the extractor 20 ; on the other hand, in response to such thrown-into coffee bean powder, a fixed quantity of water is put into the combined-use decanter 30, and the decanter 30 is mounted on the base 40 ; thereby, the outlet portion 33 of the decanter 30 and the insert receiver 41 of the base 40 are inserted into each other, and the water inside the decanter 30 can flow into the circulation path 50.

After the arrangements are settled as such, if the water-using-extraction operation switch 11 is put on ; the controller 90 makes the circulation pump 60 and the circulating water heater 70 electrically on ( see S1 in Fig.4 ). Thereby, the water within combined-use decanter 30 passes through the circulation path 50, the same water is then heated and becomes instantaneously into high temperature water on the way by means of the circulating water heater 70, and the same water is poured into the extractor 20 through the pourer 80.

Also, putting on the circulating water heater 70 may be done when the water flow sensor 53 detected that water flow had occurred inside the circulation path 50.

The controller 90 monitors the predetermined and memorized heater-on-time (T₀) of the circulating water heater 70 ( see S2 in Fig.4 ) ; when the heater-on-time (T₀) has passed, the heater 70 should be made to be off (see S3 in Fig.4 ).

Said heater-on-time (T₀) is, for instance, a fixed time limited by early operation period beginning with a point of time when the water-using-extraction operation switch 11 was put on. Also said time (T₀) can be decided to be a fixed time beginning with a point of time when the water flow sensor ( or the like ) detected the water flow within circulation path 50. Said fixed time (T₀) limited by early operation period can be, for instance, about 10 seconds to few minutes ( in response to pouring water speed or the like ) ; however, it can also be acquired beforehand by experiment, as the time necessary for pouring the quantity of high temperature water ( of, for instance, 80°C and over ) that is necessary and sufficient for coffee bean powder inside said extractor 20 to be poured for being expanded and moistened by absorption. Naturally, said time (T₀) differs by such conditions as the size of said extractor 20 or the quantity of thrown-in coffee bean powder ; for instance, in a household coffee liquid extracting apparatus, the time (T₀) can be decided as the necessary and sufficient time for about 100 to 130 cc ( of the high temperature water to be poured in early operation period ) to be poured.

By pouring high temperature water at early extraction period, coffee bean powder becomes adequately expanded, moistened, and an easily extractable state.

In said step S3, after the circulating water heater 70 has been made to be electrically off ; unheated water is successively poured, dripped by the extractor 20, and the liquid once dripped into and contained in the combined-use decanter 30 is made again to be circulated and poured into the extractor 20. The quantity of said heated high temperature water is scanty as compared with the whole water quantity ; so that, the water inside the combined-use decanter 30 never becomes high temperature by the high temperature water poured at the early period ; and in the period excepting early operation period, substantially, usual water becomes poured.

The controller 90 monitors the on-time (T₁) of the circulation pump 60 ( see S4 in Fig.4 ) ; when the on-time (T₁) has passed, the controller 90 makes the circulation pump 60 electrically off ( see S5 in Fig.4 ), and finishes the operation for extraction.

As said on-time (T₁) of the circulation pump 60, a favorable value can be decided beforehand by experiment ; for instance, it can be decided to be 10 to 20 minutes as the time necessary for the water inside the combined-use decanter 30 to circulate 2 or 3 rounds or more. Or a more suitable time can be decided directly by experiment.

Referring to Fig.5, another favorable example of the coffee liquid extraction operation by the use of the controller 90 will be explained hereunder. The flowchart shown in Fig.5 is a control flowchart of the coffee liquid extraction operation in such an apparatus as **:** the apparatus that is provided with the hot-water-using-extraction operatin switch 12 and heat-retaining operation switch 13 together with the water-using extraction switch 11 as shown in Fig.1 and Fig.3, namely the apparatus that can perform water-using-extraction operation, hot-water-using extraction operation, and heat-retaining operation.

Following Fig.5 ; now, filter paper is set in the extractor 20, and roasted and milled coffee bean powder is thrown into the extractor 20 ; on the other hand, in correspondence to said thrown coffee bean powder, a fixed quantity of water is put into the combined-use decanter 30, and the decanter 30 is mounted on the base 40 ; thereby, the outlet portion 33 of the decanter 30 and the insert receiver 41 of the base 40 are inserted into each other, and the water inside the decanter 30 becomes possible to flow out toward the circulation path 50.

In the above state, with the arrangements being ready ; when the water-using-extraction operation switch 11 is made to be put on ( when S0 in Fig.5 is YES ), the control as same as the case of aforementioned water-using-extraction-operation-only-apparatus is performed by the controller 90. Namely, the controller 90 makes the circulation pump 60 and the circulating water heater 70 electrically on ( see S1 in Fig.5 ). Thereby, the water inside the combined-use decanter 30 is made to pass through the circulation path 50 ; on the way, it is instantaneously heated and becomes high temperature water and is poured to the extractor 20 through the pourer 80. It should also be allowed that the circulating water heater 70 is made to be electrically on when the water flow sensor ( or the like ) detects that water flow has occurred within the circulation path 50. Further, if the capability of the circulating water heater 70 can be made to be exchanged ( from one value to another value ), the heater 70 should be allowed to be electrically on with the heating capability being exchanged to water-using-extraction usage.

The controller 90 monitors the predetermined fixed time T₀ of early period to pass ( see S2 of Fig.5 ) ; when T₀ has passed ( YES in S2, in Fig.5 ), the controller 90 makes the circulating water heater 70 electrically off ( see S3 in Fig.5 ). The fixed time T₀ of early period in which said circulating water heater 70 is made to be electrically on is, for instance, the fixed time of early period beginning with the point of time when the water-using-extraction operation switch 11 is made to be put on. Further, the time T₀ can be the fixed time of early period beginning with the point of time when the water flow sensor ( or the like ) detects the water flow within the circulation path 50. Said time T₀ can be acquired beforehand by experiment, as the time necessary for pouring the quantity of high temperature water that is necessary and sufficient for coffee bean powder inside said extractor 20 to be poured for being expanded and moistened by absorption. Naturally, the time T₀ becomes different in accordance with such conditions as the scale of the apparatus, the size of said extractor 20, thrown-in quantity of coffee bean powder, and circulation speed ; for instance, it can be decided to be about 10 seconds to few minutes.

By pouring high temperature water at early period of extraction, coffee bean powder becomes sufficiently expanded, moistened, and very easily extractable state.

After said circulating water heater 70 has been put off, non-heated-water is made to be successively poured ; further, the liquid that has been dripped by the extractor 20 and has been dropped into and contained in the combined-use decanter 30 is made again to be circulated and be poured into the extractor 20. By that the liquid circulates and passes again through the extractor 20, the whole time necessary for extraction can be shortened.

The quantity of said heated high temperature water is scanty as compared with the whole water quantity, so that the water within the combined-use decanter 30 does not become high temperature by the high temperature water to be poured at the early period ; in such a period as excepting early operation period, substantially, usual water becomes to be poured.

Further, the controller 90 monitors the fixed time T₁ to go by ( see S4 in Fig.5 ) ; when the time T₁ has passed (YES in S4, in Fig.5 ), the controller 90 makes the circulation pump 60 electrically off ( see S5 in Fig.5 ) and finishes the operation for water-using-extraction.

As said fixed time T₁, a favorable time is determined by experiment beforehand, and is, for instance, the time in which the water inside the combined-use decanter 30 circulates 2 or 3 round or more ; for instance, the time of about 10 to 20 minutes or more is determined by experiment beforehand in accordance with such conditions as the scale of the apparatus, the size of the extractor, and circulation speed. Or, it should be allowed to set exchangedly one of the plurality of predetermined times that have been decided beforehand in response to the quantity of the coffee bean powder to be extracted and the like.

In the next place, if the water-using-extraction operation switch 11 is made to be set off ( NO in S0, in Fig.5 ) and the hot-water-using-extraction operation switch 12 is made to be set on ( YES in S11, in Fig.5 ), the controller 90 makes the circulation pump 60 and the circulating water heater 70 electrically on ( see S12 in Fig.5 ). Thereby, the water inside the combined-use decanter 30 passes through the circulation path 50 ; on the way, it is instantaneously heated by the circulating water heater 70, becomes high temperature water, and is poured into the extractor 20 through the pourer 80. As same as the case of water-using-extraction operation ; it should be allowed that the circulating water heater 70 is made to be electrically on when the water flow sensor ( or the like ) detected that water flow had occurred within the circulation path 50. Or, in the case wherein the capability of the circulating water heater 70 is exchangeable ; it should be allowed that the heater 70 is made to be electrically on with the heating capability being exchanged into the hot-water-using-extraction operation usage.

The controller 90 monitors the fixed time T₂ to go by ( see S13 in Fig.5 ) ; until the time T₂ has passed, the extraction by high temperature water is continued. It should be allowed that ; when the operation is continuing, the temperature sensor 54 that is installed in the downstream of the circulating water heater 70 of the circulation path 50 detects the heated warm water temperature, and the output of said heater 70 is controlled in order that the said detected temperature may become a favorable value for hot-water-using-extraction operation. As the above favorable temperature value ; in view of extraction efficiency, such a high value as about 95°C will be appropriate, however 80°C or over will do as well.

The time for said hot-water-using-extraction operation, namely the fixed time T₂ can be decided to be, for instance, about 5 or 6 minutes to 10 minutes or a little over ; it can be less than the case of said water-using-extraction operation. This time T₂ can also be decided by experiment beforehand in response to the scale of the apparatus and the heating capability of the circulating water heater. Or, the time T₂ can be constituted so as to be changed stepwisely or continuously in response to the quantity of coffee bean powder to be thrown into.

When the fixed time T₂ has passed ( YES in S13, in Fig.5 ), the controller 90 makes the circulation pump 60 and the circulating water heater 70 electrically off ( see S14 in Fig.5 ), and finishes hot-water-using-extraction operation.

As the constitution of the operational control of the controller 90, it is possible to perform not only said water-using-extraction operation and said hot-water-using-extraction operation, but also said heat retaining operation. In this case ; when the heat retaining operation switch 13 is put on ( YES in S21, in Fig.5 ), the cotroller 90 makes the circulation pump 60 and the circulating water heater 70 electrically on for the fixed time T₃ per elapse of the fixed time T₄. Namely, when the heat retaining operation switch 13 is put on ; the controller 90 makes the circulation pump 60 electrically on at first, and secondly, makes the circulating water heater 70 electrically on ( see S22 in Fig.5 ). Thereby, the coffee liquid in the combined-use decanter 30 passes through the circulation path 50 ; on the way, the liquid is instantaneously heated by the circulating water heater 70, and circulates into the combined-use decanter 30. It should be allowed that the circulating water heater 70 is made to be electrically on when the water flow sensor ( or the like ) detected that water flow had occurred within the circulation path 50. Or, in the case wherein the capability of the circulating water heater 70 is exchangeable ; it should be allowed that the heater 70 is made to be electrically on with the heating capability being exchanged into the heat retaining operation usage.

The controller 90 monitors the on-time T₃ of circulating liquid heating to go by ( see 23 in Fig.5 ) ; until the time T₃ has passed, the heating of coffee liquid by circulation is continued. It should be allowed that ; when the operation is continuing, the temperature sensor 54 that is installed in the downstream of the circulating water heater 70 of the circulation path 50 detects the temperature of heated coffee liquid, and the output of said heater 70 is controlled in order that said detected temperature may become a favorable value for heat retaining operation, for instance, a constant temperature of 70°C to 85°C.

When on-time T₃ of circulating liquid heating has passed ( YES in S23, in Fig.5 ) ; the controller 90 makes the circulation pump 60 and the circulating water heater 70 electrically off ( see S24 in Fig.5 ) ; thus the standby period, namely the off-time T₄ is entered (see S25 in Fig.5 ). And when the off-time T₄ has passed ( YES in S25, in Fig.5 ), the control returns to the step S22 again, and the circulating liquid heating begins. Thus, until the heat retaining switch becomes off, or until such a fixed time ( as decided in view of safety, for avoiding forgetting putting-out ) has passed, an intermittent heating is performed.

In the above, the on-time T₃ and the off-time T₄ can adopt respectively such times as about 1 minute to 10 minutes, for instance ; however, considering the scale of the apparatus and heating capability, they can be decided by experiment beforehand.

Further, the heat retaining operation can be as such that : at first, at every fixed time, the temperature sensor detects temperature with the coffee liquid in the combined-use decanter 30 being circulating ; secondly, in the case when that temperature becomes lower than the fixed heat retaining temperature, circulating liquid heating should be carried out until the fixed heat retaining temperature comes to be reached.

Further, even if the coffee liquid is the one that has been extracted from the water-using-extraction operation ; in response to the needs, that liquid can be made to be hot coffee by making the hot-water-using-extraction operation switch or the heat-retaining operation switch electrically on. however, in this case, the extractor 20 that has already extracted coffee liquid should be removed.

In the apparatus as shown in Fig.2, only the components to perform extraction, namely, only the extractor 20 and the combined-use decanter 30 were installed in the case 10 ; however, they can be installed in the case 10 together with the roaster ( i.e. roasting device ) for roasting coffee raw bean and the pulverizer ( i.e. pulverizing device ) for pulverizing roasted bean.

Further, the coffee bean powder ( to be used at water-using-extraction time ) that has already been roasted should preferably be such one as has been adequately pulverized. And also, the powder that has not experienced any longer time after having been milled, namely the powder that has never absorbed water is preferable. Further, the powder to be used is preferably such one as has been adequately cooled and been pulverized by the pulverizer immediately after having been roasted ( from raw bean ) by the use of the roaster.

Referring to Fig.6 to Fig.8, another example of the preferable coffee liquid extracting apparatus of the present invention is explained hereunder.

As shown in Fig.6, in the above apparatus ; an extractor 120 is mounted quick-connectably-disconnectably on the upper surface of a ceiling portion 111 of a case 110 ; inside the case 110, a combined-use tank 130, a water introducing pipe 140, a circulation path 150, an overflow pipe 160, a controller 190 and others are installed ; outside a front portion 112 of the case 110, a coffee-liquid-takeout-port 170 is provided.

Said extractor 120 is the one for dripping coffee liquid ; inside which, filters or other filtering means are attached ; further inside which, the coffee bean powder that has been roasted and milled is thrown into. The extractor 120 is provided with a lid 121, and a handle 122 for carrying-use is provided. At the center of said lid 121, an opening 121a is provided, through which the liquid for extraction-use is poured.

The arrangements for extraction are settled by means of such as **:** the extractor 120 is removed out of the case 110, the lid 121 is removed, filter paper 123 or the like is attached, coffee bean powder is thrown in, and the extractor 120 is again mounted on the case 110.

Naturally, said extractor 120 can be such that a filtering means is provided in itself. Further, the extractor can be a plastic or a metallic product.

Said combined-use tank 130 is not only a vessel for receiving the coffee liquid that has been dripped from said extractor 120 but also a tank for retaining a fixed quantity of water to extract coffee liquid, and the tank 130 is arranged fixedly inside the case 110 and is situated under the position where the extractor 120 is mounted. The upper end part of the combined-use tank 130 is opened at the ceiling portion 111 of the case 110, and at this opened part, a lid 131 is put on. This lid 131 also serves for a mounting base for said extractor 120, the coffee liquid that has been extracted by the extractor 120 mounted on the lid 131 passes through a drip hole 124 and passes through a hole 131a installed at the center of the lid 131 and is then received by the combined-use tank 130 and is preserved. Said tank 130 contains the same amount of water as that of the coffee liquid to be acquired. As a result, the total amount of the water becomes coffee liquid.

Said water introducing pipe 140 is for the use of directly feeding water from the city water system toward the combined-use tank 130. One end of the pipe 140 is installed with itself being made to project into the tank 130 through the bottom 132 of the tank 130 and the other end of the pipe 140 is made to be connected to city water pipe at the part of the pipe 140 projecting from a back portion 113 of the case 110.

On the way of the water introducing pipe 140 inside the case 110, a prime stopcock 141, a pressure reducer 142, an electromagnetic open-shut-valve 143, and a water quantity sensor 144 are provided from the upstream side.

The pressure reducer 142 is for the use of feeding water into the tank 130 after reducing city water pressure properly.

Said electromagnetic open-shut-valve 143 is open-shut controlled by the controller 190, is made to be opened together with the commencement of the feedwater mode toward the tank 130, and is closed when the prescribed water quantity has just been introduced into the combined-use tank 130.

The water quantity sensor 144 is for the use of detecting the quantity of the water to be fed to the combined-use tank 130 through the water introducing pipe 140, and the water quantity information that was detected by said sensor 144 is transmitted to the controller 190 ; when the water quantity detected by the sensor 144 reaches the prescribed value, the controller 190 issues instruction of closing the valve 143.

Said circulation path 150 is the passage for the use of circulating the liquid inside the combined-use tank 130 and pouring the liquid into the extractor 120, whose one end is connected to the bottom 132 of the tank 130 and other end serves for a pouring opening 151. The liquid that has been sent through the circulation path 150 is sprinkled and poured into the extractor 120 through the opening 151 at the top of a projecting pipe 157 that projects upward from the ceiling portion 111 of the case 110.

On the way of the circulation path 150 inside the case 110, a circulation pump 152, a water flow sensor 153, a circulating water heater 154, and a temperature sensor 155 are installed from the upstream side.

Being electrically put on and off of the circulation pump 152 is made to be controlled by the controller 190. Also its discharge quantity is made to be changeable several-stepwise ; thereby, the quantity to be poured into the extractor 120 per unit time can be adjusted.

The water flow sensor 153 is for the use of detecting the water flow inside the circulation path 150, and the water flow information detected by the sensor 153 is transmitted to the controller 190. Even if the controller 190 is going to put on ( electrically ) the circulating water heater 154 ; only in such a case as the water flow sensor 153 is detecting water flow, the controller 190 actually puts on the heater 154. Further, the controller 190 can be constructed to be able to stop the operation of the circulation pump 152, only in such a case as the water flow sensor 153 has never been continuously detecting the water flow for more than a prescribed time.

The circulating water heater 154 is an instantaneous type heater, and its on-and-off is made to be controlled by the controller 190.

The temperature sensor 155 detects the temperature of the water or the warm water to be poured into the extractor 120, and the detected information is transmitted to the controller 190. It should be allowed that the heating condition by said circulating water heater 154 is made to be changed in accordance with the temperature detected by the temperature sensor 155. Naturally in this case, the heat generation quantity of the circulating water heater 154 should be able to be changed.

A discharge pipe 156 branches out on the way of the circulation path 150, and extends outside the case 110. By turning a cock 156a of this discharge pipe 156, the liquid within combined-use tank 130 can be discharged.

An overflow pipe 160 is the means for the safety of the cases including such a case wherein the feedwater to the combined-use tank 130 becomes unstoppable from one cause or another. The water can flow and be discharged into the pipe 160, before it overflows the combined-use tank 130.

A coffee-liquid-takeout-port 170 is a port to take out the coffee liquid within the tank 130 ; by operating a cock 171, coffee liquid is poured into the cups and the like of users through a pouring pipe 172. The pouring pipe 172 is connected with a level indicating pipe 173 to indicate the water level within the combined-use tank 130.

Said controller 190 has a microcomputer built-in, and performs operational control of the apparatus. Referring to Fig.7, the relationship between the controller 190 and each portion of the apparatus will be explained hereunder. Toward the controller 190 ; the signals from such sensors as a water quantity sensor 144 of the water introducing pipe 140, a water flow sensor 153 of the circulation path 150, and a temperature sensor 155 of the circulation path 150, are inputted. Also, the signal from an operation panel portion 180 arranged on a part of the front portion 112 of the case 110 is inputted. Further, from the controller 190 ; on-and-off-signal to the circulation pump 152, electric power switchover signal to an electric power switchover portion 152a of the circulation pump 152, open-and-shut signal to an electromagnetic open-shut-valve 143 of the water introducing pipe 140, and on-and-off-signal to the circulating water heater 154 of the circulation path 150 are outputted.

On said operation panel 180, an operation switch 181, a feedwater quantity setting portion 182, a high temerature water pouring mode time T₁₁ setting portion 183, a standby mode time T₁₂ setting portion 184, a non-heated-water pouring mode time T₁₃ setting portion 185, a circulation pump capability exchange setting portion 186, setting matter exchange switch 187, and an indicating portion 188 are provided. Also, a pouring temperature setting portion ( to the extractor 120 ) and the like can be provided.

Said operation switch 181 is a switch for beginning the operation.

The feedwater quantity setting portion 182 is an operation portion that sets feedwater quantity to be supplied to the combined-use tank 130 ; namely in accordance with how many cups of coffee liquid should be extracted and by being inputted such cups quantity, the portion 182 is made to be able to set the corresponding water quantity. For instance, in the case wherein 10 cups of coffee liquid is required ; number 10 should be inputted, and as a result, the corresponding water quantity can be set. Naturally, the feed water can be increased or decreased a little by providing an ancillary setting portion for setting thickness, thinness, or the like. And naturally, said feedwater quantity setting portion 182 can be made to be able to directly set the feedwater itself.

The high temperature water pouring mode time setting portion 183 is an operation portion for setting the continuing time T₁₁ of the high temperature water pouring mode.

The standby mode time setting portion 184 is an operation portion for setting the standby time T₁₂ to move to the non-heated-water pouring mode, after the completion of the high temperature water pouring mode. In the case wherein the standby time T₁₂ is made to be zero ; promtly after the completion of the high temperature water pouring mode, the non-heated-water pouring mode is entered.

The non-heated-water pouring mode time setting portion 185 is an operation portion for setting the time T₁₃ of the non-heated-water pouring mode to be performed successively after the completion of the high temperature water pouring mode and the standby time mode.

The circulation pump capability exchange setting portion 186 is an operation portion for exchanging the discharge capability of the circulation pump 152 for one of the 3 grades of strong, medium and low.

The setting matter exchange switch 187 is a switch for exchanging each setting portion 182, 183, 184, 185 or 186 whose setting can be operated in each time when the switch 187 is pushed.

The indicating portion 188 performs the indication of the value that has been set, or other indication.

In accordance with the information from each of said sensors 144, 153, and 155 and the instruction signals and setting signals from the operation panel portion 180, the controller 190 controls ( by the use of its own control program ) the circulation pump 152, the electromagnetic open-shut-valve 143 and the circulating water heater 154.

Said control program of the controller 190 consists of such modes as a feedwater mode to carry out feedwater operation and successive 3 modes ( for carrying out extraction operation ) namely a high temperature water pouring mode and successive standby mode and further successive non-heated-water pouring mode.

Said feedwater mode is the mode that automatically feeds the set water quantity from the city water system into the combined-use tank 130 through the water introducing pipe 140. At this feedwater mode ; the controller 190 opens the electromagnetic open-shut-valve 143, and when the water quantity sensor 144 detects the set water quantity the controller 190 shuts the valve 143.

The high temperature water pouring mode is the mode that heats the water in the combined-use tank 130 and pours that water into the extractor 120. In this mode, the controller 190 not only drives the circulation pump 152 but also makes the circulating water heater 154 on ; further, the controller 190 pours high temperature water into the extractor 120 for the set time of the high temperature water pouring mode time T₁₁. When the high temperature water pouring mode time T₁₁ has passed, the circulation pump 152 and the circulating water heater 154 are made to be off.

The standby mode is the mode that does not pour any high temperature water or non-heated water into the extractor 120 leaving it as it is, after the ending of said high temperature water pouring mode. In all this while of the standby mode, the coffee bean powder within the extractor 120 becomes sufficiently steamed and expanded, and turns into the state suitable to coffee liquid extraction.

The non-heated-water pouring mode is the mode for pouring the water in the combined-use tank 130 into the extractor 120 without heating that water. When the standby mode has been finished, the controller 190 drives only the circulation pump 152 for only the prescribed time T₁₃. The liquid within the extractor 120 circulates at least one round, and the whole liquid becomes coffee liquid.

Referring to Fig.8, a control example by the use of the controller 190 will be explained hereunder.

Now, the filter paper 123 is set up into the extractor 120, roasted and milled coffee bean powder of the quantity to be extracted and suitable to the cups for the presumed people is put into the extractor 120, and the extractor 120 is set in the case 110. On the other hand, at the operation panel portion 180 ; the feedwater quantity toward the combined-use tank 130, the high temperature water pouring mode time T₁₁, the standby mode time T₁₂, and the non-heated-water pouring time T₁₃ are set. After the arrangements have been settled as such ; if the operation switch 181 is made to be put on, at first, the feed water operation is started to enter the feedwater mode by the controller 190. The controller 190 not only opens the electromagnetic open-shut-valve 143 of the water introducing pipe 140 (see S101 in Fig.8 ) but also monitors the feedwater quantity information coming from the water quantity sensor 144 ( see S102 in Fig.8 ). And at the point of time when the water quantity sensor 144 detected the set water-quantity ( YES in S102, in Fig.8 ), the controller 190 shuts the electromagnetic open-shut-valve 143 ( see S103 in Fig.8 ). Thereby, the feedwater mode to perform feedwater operation is finished.

When the controller 190 finished the feedwater mode, next, it starts the extraction-operation, and makes the extraction-operation high temperature water pouring mode. At this mode ; the controller 190, at first, not only makes the circulation pump 152 electrically on but also makes the circulating water heater 154 electrically on ( see S104 in Fig.8 ). The water in the combined-use tank 130 circulates through the circulation path 150 ; on the way, it is heated instantaneously by the circulating water heater 154, it turns into high temperature water of ( for instance ) 90°C, and it is poured into the extractor 120 for the high temperature water pouring mode time T₁₁ ( for instance, about 10 seconds or more ). Also, it should be allowed that the circulating water heater 154 is made to be electrically on at the time when the water flow sensor 153 detected the occurrence of the water flow within the circulation path 150.

After the beginning time of said high temperature water pouring mode, the controller 190 monitors the predetermined high temperature water pouring mode time T₁₁ ( see S105 in Fig.8 ) ; when said high temperature water pouring mode time T₁₁ passed ( YES in S105, in Fig.8 ), the controller 190 makes the circulation pump 152 and the circulating water heater 154 electrically off ( see S106 in Fig.8 ). Thereby, the high temperature water pouring mode is finished.

When said high temperature water pouring mode is finished, the controller 190 starts the standby mode, and monitors the predetermined standby mode time T₁₂ (see S107 in Fig.8 ). In this standby mode, coffee bean powder is adequately steamed, and the arrangements for extraction become settled.

When said standby mode time T₁₂ passed ( YES in S107, in Fig.8 ), the controller 190 starts the non-heated-water pouring mode, and makes the circulation pump 152 electrically on ( see S108 in Fig.8 ). The water in the combined-use tank 130 circulates and is poured into the extractor 120, and coffee liquid becomes extracted. The extracted coffee liquid drops into the combined-use tank 130, and is received and retained there. Until the non-heated-water pouring mode time T₁₃ passed, the coffee liquid retained within the tank 130 is made to circulate again and is made to be poured into the extractor 120.

The controller 190 monitors the non-heated-water pouring mode time T₁₃ that has been set ( see S109 in Fig.8 ). When this already set non-heated-water pouring mode passed ( YES in S109, in Fig.8 ), the controller 190 makes the circulation pump 152 electrically off ( see S110 in Fig.8 ). Thereby, the non-heated-water pouring mode finishes, the extraction operation finishes, and the whole operation finishes.

The coffee liquid extracting apparatus as explained above is the one that extracts coffee liquid by means of water-using-extraction, namely the one whose waterusing coffee liquid extracting portion 100 only is constructed in the case 110. However, such an apparatus equipped with a hot coffee liquid extracting portion and a coffee bean roasting and milling portion in addition to the water-using coffee liquid extracting portion should be allowed.

Additional another example of the favorable coffee liquid extracting apparatus of the present invention will be explained hereunder, referring to Fig.9 and Fig.10.

Fig.9 shows a coffee liquid extracting apparatus having not only a water-using coffee liquid extracting portion 100 but also a hot coffee liquid extracting portion 300 and a roasting and milling portion 200.

As Fig.9 shows, the roasting and milling portion 200 is provided in the center of the apparatus. With the roasting and milling portion 200 inbetween ; the water-using coffee liquid extracting portion 100 is installed on one side, and the hot coffee liquid extracting portion 300 is installed on the other side.

The roasting and milling portion 200 is equipped with a roasting device 220 ( for roasting coffee raw bean ) on the upper part of the inside of a case 210 and with a pulverizing device 230 ( for pulverizing roasted coffee bean ) under said roasting device 220. Further, a coffee-powder-takeout-port 240 is provided for receiving the coffee bean powder pulverized by said pulverizing device 230. There is such a construction : coffee raw bean can be put into the roasting device 220 through a roasting device lid 221 installed at a ceiling portion 211 of the center part of the apparatus. 222 stands for a smoke exhaust port. Said coffee-powder-takeout-port 240 is made to be a secluded chamber whose opening is facing toward a front portion 212 of the case 210 of the roasting and milling portion 200. Coffee raw bean is roasted inside the roasting device 220 and pulverized inside the pulverizing device 230. By taking out the extractor that is equipped with filter paper ( and the like ) and by putting the extractor inside said takeout-port 240, the coffee bean powder that has been pulverized by the pulverizing device 230 can be directly thrown into the extractor ; and by setting up the same extractor in the water-using coffee liquid extracting portion 100 or in the hot coffee liquid extracting portion 300, water-using-extraction or hot-water-using-extraction can be easily performed. Especially, in case of coffee liquid water-using-extraction ; as the coffee bean powder to be used, such powder that has been sufficiently milled or such powder of shortly after the milling ( namely the powder that has not yet absorbed humidity ) is preferable. Further, the use of such powder that has been adequately cooled immediately after being roasted, and then promptly, has been milled is preferable. In the apparatus of the above example ; by juxtaposing the roasting and milling portion 200, it becomes possible to roast coffee bean just before extraction operation, to mill it into sufficiently minute powder, and to set it up in the extractor.

Also, the operation of said roasting device 220 and said pulverizing device 230 is constituted such that a series of operation from roasting to pulverizing can be automatically carried out. However, it should also be allowed that the roasting operation and the pulverizing operation can be individually performed in addition.

Said constitution of water-using coffee liquid extracting portion 100 is similar to that already described in Fig.6 to Fig.8 ; and is shown in Fig.9, with the same parts or elements being indicated with the same symbols.

A projecting pipe 157 ( of the circulation path 150 ) that projects from the ceiling portion 111 of said case 110 and that is actually a pouring opening operating portion 157a, can be constituted such that it is not only made to be freely rotatable but also its projecting amount ( from the ceiling portion 111 of the case 110 ) can be freely adjusted. Thereby, the pouring opening 151 ( at unused time ) can not only be operated rotationally to move to a retired position apart from the position of the extractor 120 but also be made to be in standby state with itself being mounted on a mount-portion 114 attached to the upper surface of the ceiling portion 111 of the case 110.

Referring to Fig.9 and Fig.10, said hot coffee liquid extracting portion 300 will be explained hereunder. An extractor 320 to be installed on a ceiling portion 311 of a case 310 is constituted as same as aforementioned extractor 120 of the water-using coffee liquid extracting portion 100. The extractor 320 is mounted quick-connectably-disconnectably on the case 310, and the extractor 320 is equipped with a lid 321, a lid opening 321a, a handle 322, filter paper 323, a drip hole 324, and the like.

Inside the case 310, there are : a receiving dedicated tank 330 that receives the coffee liquid dropping from the extractor 320, and a hot water storing tank 331 surrounding the tank 330. The tank 330 is connected with an overflow pipe 360 and a coffee-liquid takeout-port 370 ; and the coffee-liquid-takeout-port 370 is equipped with an open-shut-cock 371, a pouring pipe 372 and a level indicator 373.

Said hot water storing tank 331 is connected with a water introducing pipe 340 for introducing city water into the tank 331, a hot water pouring path 350 for pouring the hot water inside the tank 331 into the extractor 320, and a hot water supplying port 332 capable of pouring out hot water in case of necessity ( see (B) in Fig.9 ). And, a stored-hot-water heater 333 for heating the water inside the tank 331 is installed inside ( or outside ) the tank 331. Further, the hot water storing tank 331 is equipped with a water level sensor 334 and a stored-hot-water temperature sensor 335.

Said water introducing pipe 340 is provided with the combinedly-used prime stopcock 141 and the pressure reducer 142 of the water introducing pipe 140 of aforementioned water-using coffee liquid extracting portion 100 ; said pipe 340 is branched from said pipe 140 ( at the downstream position from the pressure reducer 142 ) ; and at the downstream position from the branch point, an electromagnetic open-shut-valve 343 and a water quantity sensor 344 are installed.

On said hot water pouring path 350 ; a pouring opening 351 for pouring high temperature water into the extractor 320, and ( on the way ) a circulation pump 352 are installed. Further, from the midway of said path 350, a discharge pipe 356 is branched, and the pipe 356 is connected to a discharge cock 356a.

Said hot water supplying port 332 is equipped with an open-shut-cock 332a, and connected with a hot water level indicating pipe 332b.

In addition, said projecting portion ( of the hot water pouring path 350 ) that projects from the ceiling portion 311 of said case 310 and that is actually a pouring opening operating portion 357a, is constituted as same as the pouring opening operating portion 157a in said water-using coffee liquid extracting portion 100. Thereby, the pouring opening 351 ( at unused time ) can not only be operated rotationally to move to a retired position apart from the position of the extractor 320 but also be made to be in a standby state with itself being mounted on a mount-position 314 attached to the upper surface of the ceiling portion 311 of the case 310 ( see (A) in Fig.9 ).

The operation of the hot coffee liquid extracting portion 300 will be explained hereunder. At first, in advance of manipulation of the coffee liquid extraction operation, hot-water stored operation is carried out. This hot-water stored operation is carried out in accordance with such a process as **:** firstly, by putting on a hot-water stored operation switch ( and the like ), the controller of the hot coffee liquid extracting portion 300 ( that is not illustrated here ) opens an electromagnetic open-shut-valve 343 of the water introducing pipe 340, and introduces city water into the hot-water storing tank 331 beforehand ; secondly, by putting on the stored hot-water heater 333, the same controller heats and keeps-warm the water inside the hot-water storing tank 331 at prescribed high temperature state. Next to the above hot-water stored operation, the main operation, namely the hot coffee liquid extraction operation is carried out. The hot coffee liquid extraction operation is carried out in accordance with such a process as **:** firstly, the extractor 320 that has been equipped with the filter paper 323 and is containing coffee bean powder is set up to the ceiling portion 311 of the case 310 ; secondly, the pouring opening 351 is set up to the lid opening 321a of the extractor 320 ; ( on the other hand ) thirdly, extraction quantity ( high temperature water pouring quantity ) is set, ( thereafter ) fourthly, an extraction operation switch is put on. As a result, the coffee liquid extracted by the extractor 320 drops into the receiving dedicated tank 330 and is accumulated there. Thanks to the surrounding hot water storing tank 331, the coffee liquid is kept at heat retaining state. By opening the open-shut-cock 371 of the coffee-liquid-takeout-port 370, the user can receive hot coffee liquid with cups and the like and enjoy drinking it.

### Industrial Application

As aforementioned ; the coffee liquid extracting apparatus of the present invention, as a household coffee liquid extractor or as a coffee liquid extractor for the use of business at teahouse, restaurant or the like, can quickly perform water-using-extraction of coffee liquid of little astringency, caffeine and sundry taste, of good taste, of little oil content and oxidation tendency, and of favorable amber color. Further, savory ice coffee can be prepared in short time.

Further, the coffee liquid extracting apparatus of the present invention enables the user to select water-using-extraction or hot-water-using-extraction. Or the apparatus can be provided with both water-using-coffee-liquid extracting portion and hot-coffee-liquid-extracting portion within one unit ; so that, by using one unit of such an apparatus for household or business purpose, hot coffee and ice coffee can be freely acquired.

Further, said apparatus can be provided with a roasting and milling portion together with a water-using coffee liquid extracting portion and a hot coffee liquid extracting portion. So that, by the use of such an apparatus and by using raw bean, thorough process from roasting to coffee liquid extraction can be carried out.

## Claims

1. Coffee liquid extracting apparatus characterized to comprise **:** an extractor (20) for dripping coffee liquid, a combined-use decanter (30) that is installed quick-connectably-disconnectably under said extractor (20) and not only keeps extraction-use water but also receives the coffee liquid dropping from said extractor (20) and further can freely pour the received coffee liquid into cups or the like, a circulation path (50) and a circulation pump (60) that take out the liquid inside the mounted combined-use decanter (30) from its bottom and transport the liquid to the upside of said extractor (20) and pour the liquid into the extractor (20), a circulating water heater (70) installed on the midway of said circulation path (50), and a controller (90) that controls said circulating water heater (70) and said circulation pump (60) ; wherein said controller (90), by putting on a water-using-extraction operation switch (11), not only drives said circulation pump (60) to circulate the liquid for a fixed time (T₁) but also puts on said circulating water heater (70) for a fixed time (T₀) limited in early operation period, thereby making highly heated water poured into the extractor (20) for the fixed time (T₀) limited in the early operation period, then making non-heated water poured into the extractor (20).

2. Coffee liquid extracting apparatus characterized to comprise **:** an extractor (20) for dripping coffee liquid, a combined-use decanter (30) that is installed quick-connectably-disconnectably under the extractor (20) and not only keeps extraction-use water but also receives the coffee liquid dropping from said extractor (20), a circulation path (50) and a circulation pump (60) that take out the liquid inside the combined-use decanter (30) from its bottom and transport the liquid to the upside of said extractor (20) and pour the liquid into the extractor (20), a circulating water heater (70) installed on the midway of said circulation path (50), and a controller (90) that performs such kinds of operation as water-using-extraction operation for ice coffee and hot-water-using-extraction operation for hot coffee ; wherein said controller (90) ( in accordance with its operational control constitution ) ; firstly, when given instruction of said water-using-extraction operation for ice coffee, not only drives said circulation pump (60) to circulate the liquid for a fixed time (T₁) but also puts on said circulating water heater (70) for a fixed time (T₀) limited in early operation period ( in that while, pours highly heated water into said extractor (20) ; then, pours non-heated-water into the extractor (20) ), and secondly, when given instruction of said hot-water-using-extraction operation for hot coffee, not only drives said circulation pump (60) to circulate the liquid for a fixed time (T₂) but also ( in the while of this operation ) puts on said circulating water heater (70) and pours highly heated water into said extractor (20).

3. Coffee liquid extracting apparatus as defined in claim item 2 characterized to comprise a controller (90) ( Whose control ability comprises such a kind of operation as heat retaining operation ) ; wherein said controller (90) ( in accordance with its operational control constitution ) ; when given instruction of heat retaining operation, not only drives a circulation pump (60) for a fixed time (T₃) per elapse of a fixed time (T₄) but also puts on a circulating water heater (70).

4. Coffee liquid extracting apparatus, as defined in any of claim items 1 to 3, characterized to comprise an outlet portion (33) ( equipped with a valve body (34) ) installed at the bottom of a combined-use decanter (30) ; wherein said outlet portion (33) connects with a circulation path (50) side ( and the valve body (34) opens the outlet portion (33) ) when the combined-use decanter (30) was mounted in place, however the portion (33) becomes shut by the valve body (34) when the combined-use decanter (30) became unmounted state.

5. Coffee liquid extracting apparatus characterized to be provided with a water-using coffee liquid extracting portion (100) that is comprising : an extractor (120) for containing roasted and milled coffee bean powder and for dripping coffee liquid, a combined-use tank (130) that not only reserves extraction-use water by being installed under the mount position of said extractor (120) but also receives the extracted liquid dropping from said extractor (120), a coffee-liquid-takeout-port (170) that is connected to the combined-use tank (130) and takes out coffee liquid within the combined-use tank (130) ( by freely opening and shutting itself ), a circulation path (150) and a circulation pump (152) that transport the liquid of said combined-use tank (130) to the upside of said extractor (120) and pour the liquid into said extractor (120), a circulating water heater (154) installed on the midway of said circulation path (150), and a controller (190) ; wherein said controller (190), firstly, for a fixed time (T₁₁) limited in early operation period ( beginning with extraction operation ), puts on both said circulation pump (152) and said circulating water heater (154) and resultingly realizes a high temperature water pouring mode ( that pours high temperature water into said extractor (120) ), secondly, for a succeeding fixed time (T₁₃), puts on only said circulation pump (152) and realizes a non-heated-water pouring mode ( that pours non-heated-water into said extractor (120) ).

6. Coffee liquid extracting apparatus as defined in claim item 5 characterized to comprise a controller (190) having a standby mode as its control constitution ; wherein said standby mode makes both a circulation pump (152) and a circulating water heater (154) stopped for a fixed time (T₁₂) between a high-temperature-water pouring mode and a non-heated-water pouring mode.

7. Coffee liquid extracting apparatus as defined in claim item 5 or claim item 6 characterized to comprise a water introducing pipe (140) for introducing the water from city water system into a combined-use tank (130), an open-shut-valve (143) and a water quantity sensor (144) attached to the water introducing pipe (140), and a controller (190) having a feedwater mode as its control constitution ; wherein said feedwater mode makes predetermined quantity of the city water fed into the combined-use tank (130) by opening the open-shut-valve (143) of said water introducing pipe (140) until said water quantity sensor (144) detects the predetermined water quantity in advance of extracting operation.

8. Coffee liquid extracting apparatus as defined in claim item 7 characterized to comprise a controller (190) ; wherein said controller (190), firstly when an operation switch (181) is put on, has a feedwater mode implemented, secondly when the feedwater mode finishes, has automatically a high-temperature-water pouring mode implemented, thirdly when the high-temperature-water pouring mode finishes, has automatically a standby mode implemented, fourthly when the standby mode finishes, has automatically a non-heated-water pouring mode implemented.

9. Coffee liquid extracting apparatus as defined in claim item 8 characterized by that each of a high-temperature-water pouring mode continuing time, a none-heated-water pouring mode continuing time and a standby mode continuing time is made to be adjustably set.

10. Coffee liquid extracting apparatus as defined in claim item 9 characterized by that a high-temperature-water pouring mode continuing time and a non-heated-water pouring mode continuing time are not set by mere time, but instead, they are respectively made to be the time necessary for predetermined fixed high-temperature-water pouring quantity to have been poured out and the time necessary for predetermined fixed non-heated-water pouring quantity to have been poured out.

11. Coffee liquid extracting apparatus characterized to comprise **:** a roasting and milling portion (200) that is installed at the center of the apparatus ; and with the roasting and milling portion inbetween, one-sidedly, water-using coffee liquid extracting portion (100) ; and the-other-sidedly, hot coffee liquid extracting portion (300) for extracting ( by the use of high temperature water ), retaining, and supplying coffee liquid ; wherein said roasting and milling portion (200) is provided with a coffee bean roasting device (220), a pulverizing device (230) for receiving and pulverizing the already-roasted coffee bean coming from said roasting device (220), and a coffee-bean-powder-takeout-port (240) for receiving the coffee bean powder pulverized by said pulverizing device (230).
